(19) Europäisches Patentamt
European Patent Office
Office européen des brevets

(11) **EP 2 179 301 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(21) Anmeldenummer: **08784660.6**

(22) Anmeldetag: **09.07.2008**

(51) Int Cl.:
***G01S 17/02*** *(2006.01)*

(86) Internationale Anmeldenummer:
**PCT/EP2008/005573**

(87) Internationale Veröffentlichungsnummer:
**WO 2009/012886 (29.01.2009 Gazette 2009/05)**

(54) **OPTISCHER SENSOR**

OPTICAL SENSOR

CAPTEUR OPTIQUE

(84) Benannte Vertragsstaaten:
**DE FR GB IT**

(30) Priorität: **20.07.2007 DE 102007034069**

(43) Veröffentlichungstag der Anmeldung:
**28.04.2010 Patentblatt 2010/17**

(73) Patentinhaber: **Leuze electronic GmbH + Co. KG**
**73277 Owen/Teck (DE)**

(72) Erfinder: **ARGAST, Martin**
**72584 Hülben (DE)**

(74) Vertreter: **Ruckh, Rainer Gerhard**
**Fabrikstrasse 18**
**73277 Owen/Teck (DE)**

(56) Entgegenhaltungen:
EP-A1- 1 722 191    WO-A-01/29576
DE-A1- 4 445 535    DE-A1- 10 254 888
DE-A1- 19 808 215    DE-A1- 19 951 557

**Beschreibung**

Die Erfindung betrifft einen optischen Sensor zur Erfassung von Objekten innerhalb eines Überwachungsbereichs.

Ein derartiger optischer Sensor ist aus der DE 198 08 215 A1 bekannt.

Dieser optische Sensor weist neben zwei Sendelichtstrahlen emittierenden Sendern einen ortsauflösenden Empfänger mit einem Nah- und Fernelement auf.

Mit diesem Empfänger zusammen mit den in Abstand hierzu angeordneten Sendern bildet dieser optische Sensor eine nach dem Triangulationsprinzip arbeitende Vorrichtung, mittels derer Distanzinformationen über zu detektierende Objekte gewonnen werden können. Insbesondere kann mit einem solchen optischen Sensor ein Objekt vor einem Hintergrund erfasst werden, der zuvor in einem Einlernvorgang eingelernt wurde.

Nachteilig hierbei ist jedoch, dass ortsauflösende Empfänger relativ teuer sind und diese somit die Herstellkosten des optischen Sensors erhöhen. Weiterhin ist auch der schaltungstechnische Aufwand zur Auswertung der Empfangssignale des ortsauflösenden Empfängers groß, da die hierfür vorgesehene Schaltung mehrkanalig ausgelegt sein muss, um die einzelnen Empfangssignale der Empfangselemente, insbesondere des Nah- und Fernelements, auswerten zu können. Ein weiteres Problem derartiger ortsauflösender Empfänger mit diesen zugeordneten mehrkanaligen Schaltungen besteht darin, dass Messfehler dadurch entstehen können, dass die Empfangselemente in unterschiedlicher Weise mit Fremdlicht, insbesondere Gleichlicht, beaufschlagt werden, oder dass bedingt durch unterschiedliche Zeitkonstanten der beiden Empfängerkanäle Signaldifferenzen auftreten können.

In der DE 4 445 535 A1 ist optischer Sensor zur berührungslosen Erfassung des Abstandes zwischen dem Sensor und einem Messobjekt beschrieben. Der Sensor ist ausgebildet mit mindestens einer Lichtquelle, die Licht annähernd punkt- oder linienförmig auf das Messobjekt projieziert, mit einer Abbildungsoptik, die innerhalb des Messbereiches des Sensors das vom Messobjekt diffus reflektierte Licht so defokussiert auf eine mindestens zweigeteilte Photodetektoranordnung verteilt, dass der Gesamtbetrag des auszuwertenden reflektierten Lichtes anteilsmäßig entsprechend dem Abstand des Messobjektes auf der Photodetektoranordnung liegt, und mit einer am Ausgang der Photodetektoranordnung angeschlossenen elektrischen Schaltung zur Auswertung der Signale.

Die WO 01/29576 A1 betrifft einen Distanzsensor mit einem Lichtstrahlen emittierenden Sender und einem Lichtstrahlen empfangenden Empfänger mit wenigstens zwei Photodetektoren. Mit einer Lichtblockiervorrichtung in Form eines Spiegels kann eine Abschaltung der Lichtstrahlen so erfolgen, dass sie nicht mehr die Zentren der Potodioden erreichen. In einer Auswerteeinheit wird die Linearkombination der Empfangspegel der Photodetektoren ausgewertet.

Ebenso sind aus DE 19951557 und EP 1 722 191 optische Distanzsensoren mit zwei Sendern und einem ortsauflösenden Empfänger bekannt.

Der Erfindung liegt die Aufgabe zugrunde, einen optischen Sensor der eingangs genannten Art bereitzustellen, welcher bei geringem konstruktiven Aufwand eine genaue und zuverlässige Objektdetektion ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten innerhalb eines Überwachungsbereichs. Der optische Sensor umfasst zwei Senlichtpulsen emittieren sowie einen Empfänger, auf welchen die von einem Objekt reflektierten Sendelichtpulse der beiden Sender als Empfangslichtstrahlen auftreffen. Die Empfangslichtstrahlen werden so abgetastet, dass der bei einem Abtastzeitpunkt erhaltene Empfangspegel oder die Linearkombinationen der bei mehreren Arbeitszeitpunkten erhaltenen Empfangspegel ein für den Objektabstand charakteristisches Maß des Verhältnisses der Empfangspegel der von den beiden Sendern emittierten und auf den Empfänger geführten Sendelichtstrahlen enthalten. In der Auswerte- und Steuereinheit werden die Empfangspegel oder deren Linearkombination mit einem eine Tastweite definierenden Schwellwerte bewertet, wodurch ein binäres Schaltsignal generiert wird, dessen Schaltzustände angeben, ob sich ein Objekt innerhalb des von der Tastweite begrenzten Überwachungsbereichs befindet oder nicht. Dem Empfänger ist eine Empfängerblende zur Ausblendung eines Teils der Empfangslichtstrahlen vorgeordnet. Die Sender und der Empfänger sind längs einer Geraden angeordnet. Ein Sender bildet einen Referenz-Sender, welcher in geringem Abstand zum Empfänger so angeordnet ist, dass die von diesen emittierten Sendelichtstrahlen unabhängig von der Objektdistanz nach Reflektion an einem Objekt zumindest weitgehend vollständig auf den Empfänger treffen. Der zweite Sender bildet einen Mess-Sender und ist in größerem Abstand zum Empfänger angeordnet, so dass abhängig von der Objektdistanz ein Teil der vom Mess-Sender emittierten und vom Objekt reflektierten Sendelichtstrahlen von der Blende abgeschirmt wird und nicht auf den Empfänger trifft.

Ein wesentlicher Vorteil des erfindungsgemäßen optischen Sensors besteht darin, dass mit diesem bei konstruktiv und schaltungstechnisch einfachem Aufbau Ortsinformationen bei der Objektdetektion gewonnen werden können, so dass insbesondere Objekte vor einem Hintergrund sicher detektiert werden können.

Insbesondere ist hierbei vorteilhaft, dass der Empfänger von einem einzelnen Empfangselement, das heißt einem Element mit einer einzigen lichtempfindlichen Fläche, gebildet sein kann. Der optische Sensor ist dadurch kostengünstig herstellbar.

Obwohl der Empfänger des erfindungsgemäßen optischen Sensors damit kein ortsauflösender Empfänger ist, können bei dem optischen Sensor nach dem Triangulationsprinzip Ortsinformationen über zu detektierende Objekte gewonnen werden.

Dies wird dadurch ermöglicht, dass die beiden Sender in unterschiedlichen Abständen zum Empfänger angeordnet sind.

Vorteilhaft hierbei ist, dass die Sender und der Empfänger längs einer Geraden angeordnet sind. Ein Sender bildet einen Referenz-Sender, welcher in geringem Abstand zum Empfänger so angeordnet ist, dass die von diesem emittierten Sendelichtstrahlen unabhängig von der Objektdistanz nach Reflektion an einem Objekt zumindest weitgehend vollständig auf den Empfänger treffen und der zweite Sender einen Mess-Sender bildet, welcher in größerem Abstand als der erste Sender zum Empfänger angeordnet wird, so dass abhängig von der Objektdistanz ein Teil der vom Mess-Sender emittierten und vom Objekt reflektierten Sendelichtstrahlen von der Blende abgeschirmt wird und nicht auf den Empfänger trifft.

Die Distanzinformationen werden erfindungsgemäß dadurch gewonnen, dass das am Empfänger anstehende Empfangssignal zu bestimmten Abtastzeitpunkien abgetastet wird, wobei diese Abtastzeitpunkte so gewählt sind, dass die dabei ermittelten Empfangssignale abhängig von den Verhältnissen der Anteile der vom ersten und zweiten Sender stammenden Empfangslichtanteile, das heißt der Lichtmengen der Sendelichtstrahlen beider Sender, die über das Objekt auf den Empfänger gerührt sind.

Bevorzugt emittieren die Sender dabei periodisch alternierend Sendelichtpulse mit einem vorgegebenen Puls-Pausenverhältnis, wobei die Abtastung der Empfangssignale ebenfalls periodisch erfolgt, das heißt innerhalb jeder Periode wird das Empfangssignal zu demselben Abtastzeitpunkt oder denselben Abtastzeitpunkten abgetastet.

Gemäß einer ersten Variante der Erfindung bilden die am Empfänger erhaltenen Empfangssignale eine Überlagerung des jeweils während einer Periode emittierten Sendelichtpulses des ersten Senders und des Sendelichtpulses des zweiten Senders. Während jeder Periode wird das Empfangssignal zu einem Abtastzeitpunkt abgetastet, wodurch ein Empfangspegel gewonnen wird, der mit dem Schwellwert bewertet wird.

Da in diesem Fall das Empfangssignal am Empfänger eine Überlagerung der von den beiden Sendern emittierten Sendelichtstrahlen darstellt, reicht in diesem Fall bereits eine Abtastung pro Periode aus, um die gewünschten Ortsinformationen über das Objekt zu erhalten. Der Pegel des Empfangssignals zu diesem Abtastzeitpunkt variiert dann nämlich in eindeutiger Weise in Abhängigkeit des Objektabstandes, der durch die ebenfalls distanzabhängigen Anteile der Sendelichtstrahlen beider Sender, die auf den Empfänger treffen, bestimmt ist.

Gemäß einer zweiten Variante der Erfindung werden während jeder Periode die am Ausgang des Empfängers anstehenden Empfangssignale jeweils einmal während der Emission der Sendelichtstrahlen des ersten und zweiten Senders sowie während der Sendepause abgetastet. Weiter wird eine Linearkombination der bei diesem Abtastzeitpunkt ermittelten Empfangspegel gebildet, wobei diese mit einem Schwellwert bewertet wird.

Diese Variante wird dann gewählt, wenn das Puls-Pausen-Verhältnis der Sendelichtpulse so gewählt ist, dass die Empfangssignale keine Überlagerung der Sendelichtstrahlen beider Sender bilden. In diesem Fall werden die Ortsinformationen über zu detektierende Objekte dadurch gewonnen, dass während einer Periode Objekte das Empfangssignal an mehreren Abtastzeitpunkten abgetastet wird, wobei dann die Linearkombination der abgetasteten Empfangspegel abhängig vom Verhältnis der Anteile der Sendelichtstrahlen beider Sender ist und damit die gewünschten Ortsinformationen liefert.

Erfindungsgemäß wird in dem optischen Sensor als Ausgangsgröße ein binäres Schaltsignal generiert, in dem die ortsabhängigen Größen, nämlich die an den Abtastzeitpunkten ermittelten Empfangspegel beziehungsweise deren Linearkombination, mit einem Schwellwert, der vorzugsweise auf den Wert Null gesetzt wird, bewertet werden.

Dieser Schwellwert entspricht einer Tastweite, das heißt der Pegelwert des Schwellwerts entspricht bei einem definierten Reflexionsgrad einer bestimmten Objektdistanz.

Durch diese Schwellwertbewertung können selektiv nur Objekte detektiert werden, die innerhalb eines von der Tastweite begrenzten Überwachungsbereichs angeordnet sind, das heißt nur Objekte, die in Distanzen innerhalb der Tastweite angeordnet sind, führen zu einer Objektmeldung, nicht jedoch Objekte in größeren Distanzen.

Ein weiterer Vorteil des erfindungsgemäßen optischen Sensors besteht darin, dass die Tastweite sowohl mechanisch als auch elektronisch eingestellt werden kann.

Zur mechanischen Einstellung der Tastweite wird die Blende vor dem Empfänger verschoben. Die elektronische Tastweiten-Einstellung kann bei der ersten Variante durch Einstellung der Pulslängen der Sendelichtpulse und/oder der Sendepausen zwischen den Sendelichtpulsen erfolgen. Bei der zweiten Variante erfolgt die Einstellung der Tastweite durch Parameteränderung.

Die Erfindung wird im Nachstehenden anhand der Zeichnungen erläutert. Es zeigen:

Figur 1: Blockschaltbild eines Ausführungsbeispiels des erfindungsge- mäßen optischen Sensors.

Figur 2: Erstes Beispiel des mechanischen Aufbaus des optischen Sen- sors gemäß Figur 1.

Figur 3: Aufbau einer ersten Auswerte- und Steuereinheit für den opti- schen Sensor gemäß Figur 1.

Figur 4: Zeitdiagramme von Signalen des optischen Sensors gemäß Figur 1 mit der Auswerte- und Steuereinheit gemäß Figur 3 a) Sendelichtpuls des ersten Senders b) Sendelichtstrahlen des zweiten Senders c) Fotostrom des Empfängers d) Empfangspegel des Empfängers.

Figur 5: Schematische Darstellung von Sendelichtflecken der Sender des optischen Sensors gemäß Figur 1 auf dem Empfänger.

Figur 6: Abstandsabhängiger Verlauf des Empfangspegels des Empfän- gers des optischen Sensors gemäß Figur 1.

Figur 7a-c: Darstellungen von Sendelichtflecken des Senders des optischen Sensors gemäß Figur 1 auf dem Empfänger für verschiedene Ob- jektdistanzen.

Figur 8: Zeitdiagramme von Signalen des optischen Sensors gemäß Figur 1 mit der Auswerte- und Steuereinheit gemäß Figur 3 bei der Tastweiten-Einstellung durch Sendepausenvariation a) Sendelichtpuls des ersten Senders b) Sendelichtpuls des zweiten Sender c) Fotostrom des Empfängers d) Empfangspegel des Empfängers.

Figur 9: Zeitdiagramm des Empfangspegels des Empfängers des opti- schen Sensors gemäß Figur 1 mit der Auswerte- und Steuerein- heit gemäß Figur 3 bei einer Tastweiten-Einstellung durch Sen- depausenvariation.

Figur 10: Zeitdiagramme von Signalen des optischen Sensors gemäß Figur 1 mit der Auswerte- und Steuereinheit gemäß Figur 3 bei einer Tastweiten-Einstellung durch Sendepausenvariation.

Figur 11: Aufbau einer zweiten Auswerte- und Steuereinheit für den opti- schen Sensor gemäß Figur 1.

Figur 12: Zeitdiagramm des Empfangspegels des Empfängers des opti- schen Sensors gemäß Figur 1 mit der Auswerte- und Steuerein- heit gemäß Figur 11.

Figur 13: Abstandsabhängigkeit von Empfangspegeln und daraus abgelei- teter Signale für den optischen Sensor gemäß Figur 1 mit der Auswerte- und Steuereinheit gemäß Figur 11.

Figur 14: Zweites Beispiel des mechanischen Aufbaus des optischen Sen- sors gemäß Figur 1.

Figur 15: Seitenansicht der Anordnung gemäß Figur 14.

Figur 16: Strahlengang für die Anordnung gemäß Figur 14.

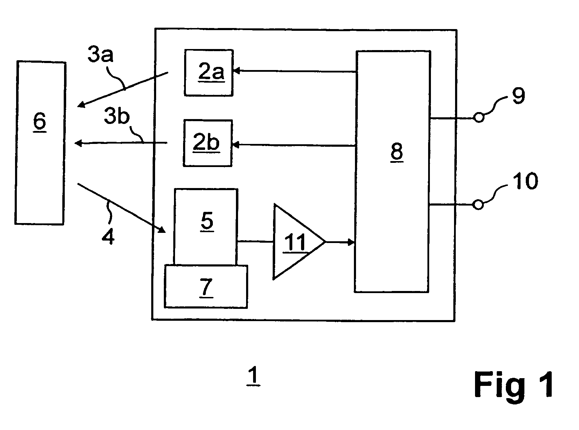

Figur 1 zeigt ein Ausführungsbeispiel eines optischen Sensors 1 zur Objekterfassung innerhalb eines Überwachungsbereichs. Der optische Sensor 1 weist zwei Sender 2a, 2b auf. Jeder Sender 2a, 2b emittiert Sendelichtstrahlen 3a, 3b in Form von Sendelichtpulsen. Dabei emittieren die Sender 2a, 2b alternierend und periodisch Sendelichtpulse mit einem vorgegebenen Puls-Pausen-Verhältnis. Weiterhin ist ein Empfangslichtstrahlen 4 empfangender Empfänger 5 vorgesehen. Die von den Sendern 2a, 2b emittierten Sendelichtstrahlen 3a, 3b werden an einem Objekt 6 im Überwachungsbereich reflektiert und von dort zum Empfänger 5 geführt. Die Sender 2a, 2b sind in unterschiedlichen Abständen zum Empfänger 5 angeordnet. Dadurch variieren die Auftreffpunkte der Sendelichtstrahlen 3a, 3b der Sender 2a, 2b auf dem Empfänger 5 in Abhängigkeit des Objektabstands in unterschiedlicher Weise. Der Empfänger 5 besteht aus einem einzelnen Empfangselement mit einer lichtempfindlichen Fläche. Dieser ist eine Empfängerblende 7 vorgeordnet, die einen vorgegebenen Teil der lichtempfindlichen Fläche abschattet, so dass dort kein Licht auf den Empfänger 5 treffen kann.

Zur Signalauswertung ist eine Auswerte- und Steuereinheit 8 vorgesehen, an welche ein Schaltausgang 9 und eine Schnittstelle 10 zur Parametrierung des optischen Sensors 1 angeschlossen ist. Die Empfangssignale am Ausgang des Empfängers 5 werden über einen Verstärker 11 der Auswerte- und Steuereinheit 8 zugeführt.

In der Auswerte- und Steuereinheit 8 wird das Empfangssignal des Empfängers 5 periodisch, das heißt mit der Periode der Emission der Sendelichtpulse, zu definierten Abtastzeitpunkten abgetastet.

Die bei den Abtastzeitpunkten erhaltenen Empfangssignale oder Linearkombinationen hiervon werden in der Auswerte- und Steuereinheit 8 mit einem Schwellwert s1 bewertet, der einer bestimmten Tastweite, das heißt einer bestimmten Distanz, die die Grenze des Überwachungsbereichs definiert, entspricht. Durch diese Schwellwertbewertung wird ein binäres Schaltsignal generiert, das über den Schaltausgang ausgegeben wird. Die Schaltzustände des Schaltsignals geben an, ob sich ein Objekt 6 innerhalb des durch die Tastweite begrenzten Überwachungsbereichs befindet oder nicht.

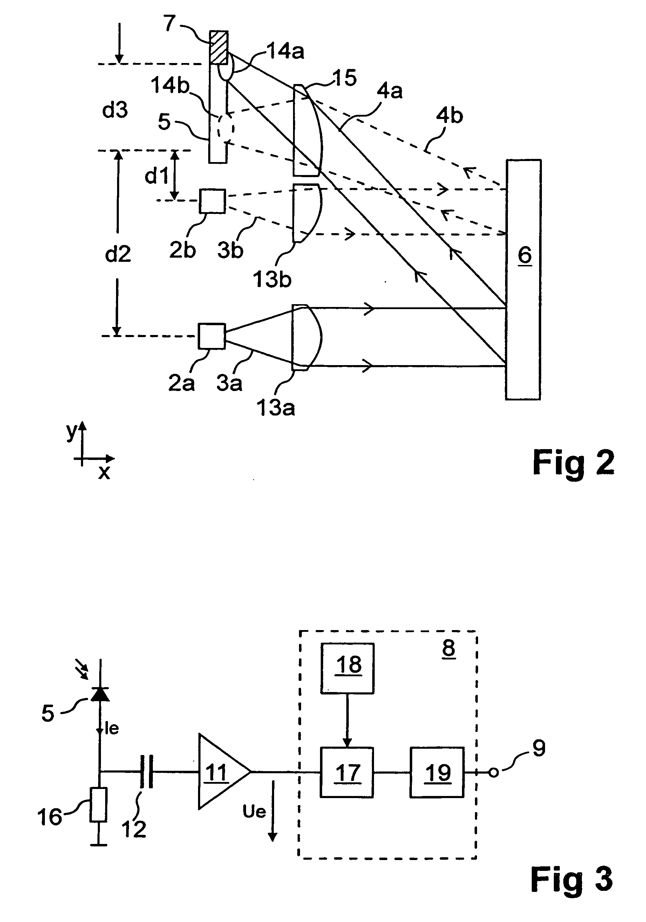

Figur 2 zeigt ein erstes Beispiel einer Optikanordnung für den optischen Sensor 1 gemäß Figur 1 mit dem Strahlengang der Sendelichtstrahlen 3a, 3b und Empfangslichtstrahlen 4 und der Funktion der Empfängerblende 7. Der Sender 2b dient als Referenzsender, dessen Empfangslichtfleck 14b für jede Objektposition möglichst vollständig auf den Empfänger 5 treffen soll. Dazu wird der Basisabstand d1 so klein wie möglich gehalten und die Sendelinse 13b und die Empfangslinse 15 einseitig so zueinander angeordnet, dass deren optische Achsen möglichst dicht benachbart liegen. Dadurch wandert der Empfangslichtfleck bei einer Objektabstandsänderung nur geringfügig in y-Richtung.

Der Sender 2a dient als Mess-Sender. Dieser hat einen möglichst großen Basisabstand d2, damit die Fleckwanderung des zugehörigen Empfangslichtfleckes 14a bei Objektannäherung schnell in Richtung der Empfangsblende 7 wandert und durch diese teilweise abgedeckt wird. Bei einem durch die Auswertung in der Auswerte- und Steuereinheit 8 definierten Abdeckungsgrad wird ein binäres Schaltsignal generiert.

Durch Verschiebung der Empfängerblende 7, z.B. Verkürzung des Abstandes d3, wird der Schaltpunkt des optischen Sensors 1 zu größeren Objektabständen hin verschoben, das heißt die Tastweite wird verändert. Die beiden Sendelichtstrahlen 3a, 3b werden vorzugsweise kollimiert und parallel zueinander geführt, so dass auf dem Objekt 6 zwei dicht benachbarte Sendelichtflecke entstehen.

Figur 3 zeigt ein erstes Ausführungsbeispiel der Auswerte- und Steuereinheit 8 mit einem Komparator 19. Der Fotostrom Ie im Empfänger 5 erzeugt im Arbeitswiderstand 16 einen Spannungsabfall, dessen Gleichanteil über den Koppelkondensator 12 abgetrennt und durch den Verstärker 11 als verstärktes Empfangssignal Ue der Auswerte- und Steuereinheit 8 zur Verfügung gestellt wird. Das S&H-Glied 17 (Sample&Hold-Glied) tastet am Ende des Sendepulses des Senders 2a das Empfangssignal Ue ab. Der Abtastzeitpunkt wird durch den Taktgeber 18 vorgegeben. Der Komparator 19 bewertet das Signal mit Hilfe des Schwellwertes s1, wodurch das binäre Schaltsignal generiert wird, das über den Schaltausgang 9 ausgegeben wird.

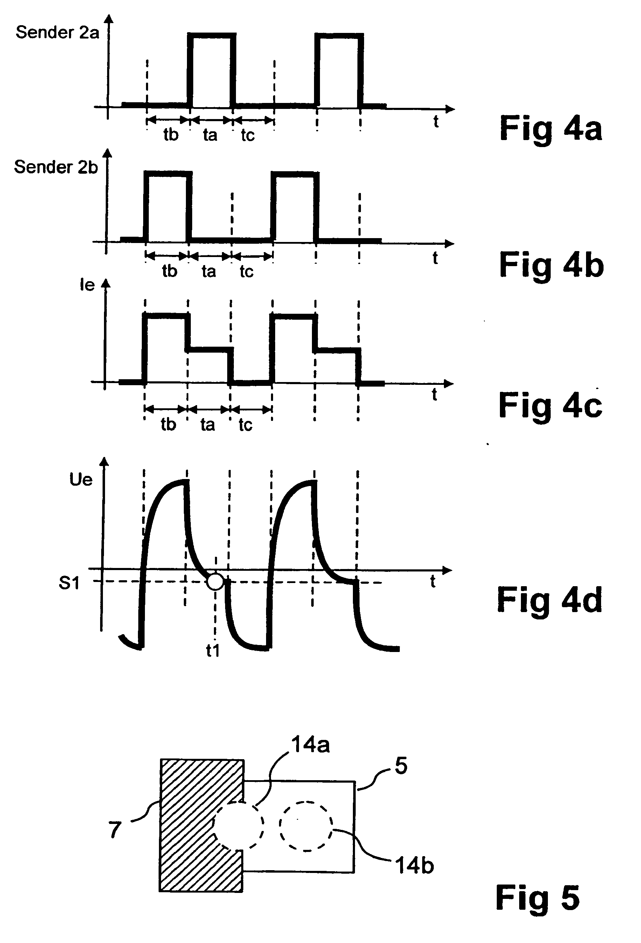

Die Figuren 4a bis 4d zeigen die zeitlichen Verläufe der für die Auswertung mit der Auswerte- und Steuereinheit 8 gemäß Figur 3 relevanten Signale. Die Sender 2a, 2b emittieren, wie in den Figuren 4a, 4b dargestellt, periodisch Sendelichtpulse. Die Pulslängen $t_a$, $t_b$ der Sendelichtpulse beider Sender 2a, 2b sind gleich groß. Die Sendepausen zwischen den Sendelichtpulsen der Sender 2a, 2b sind ebenfalls gleich groß und betragen $t_c = t_a = t_b$. Dementsprechend folgt unmittelbar auf einen Sendelichtpuls des zweiten Senders 2b ein Sendelichtpuls des ersten Senders 2a und dann eine Pause der Länge $t_c$. Dementsprechend ergibt sich der in Figur 4c dargestellte Fotostrom Ie im Empfänger 5. Da nach Reflexion an einem Objekt 6, das sich im vorliegenden Fall in einem der Tastweite entsprechenden Abstand zum Objekt 6 befindet, durch die Empfängerblende 7 nur die Sendelichtstrahlen 3a des Senders 2a, nicht jedoch die Sendelichtstrahlen 3b des Senders 2b, abgeschattet werden, ist der Fotostrom Ie im Zeitintervall $t_b$ größer als im Zeitintervall $t_a$.

Die Tastweite ist so gewählt, dass wie in Figur 5 dargestellt, der durch die Sendelichtstrahlen 3a des Senders 2a generierte Empfangslichtfleck etwa zur Hälfte durch die Empfängerblende 7 abgeschattet wird, jedoch der durch die Sendelichtstrahlen 3b des Senders 2b generierte Empfangslichtfleck nicht durch die Empfängerblende 7 abgeschattet wird. Daher ist der Fotostrom im Zeitintervall $t_b$ etwa doppelt so groß wie im Zeitintervall $t_a$.

Figur 4d zeigt den Zeitverlauf des Empfangssignals Ue, das heißt der Spannung am Ausgang des Empfängers 5. Da durch den Koppelkondensator 12 der Gleichanteil des Empfangsanteils eliminiert wird, ist der Pegel des Empfangssignals Ue zum Abtastzeitpunkt $t_1$ abhängig sowohl von dem Anteil des Sendelichts des Senders 2b, das während $t_b$ auf den Empfänger 5 gelangt, als auch von dem Anteil des Sendelichts des Senders 2a, das während $t_a$ auf den Empfänger 5 gelangt. Dementsprechend variiert das Empfangssignal Ue zum Abtastzeitpunkt $t_1$, das heißt Ue ($t_i$) abhängig von der aktuellen Distanz des Objekts 6.

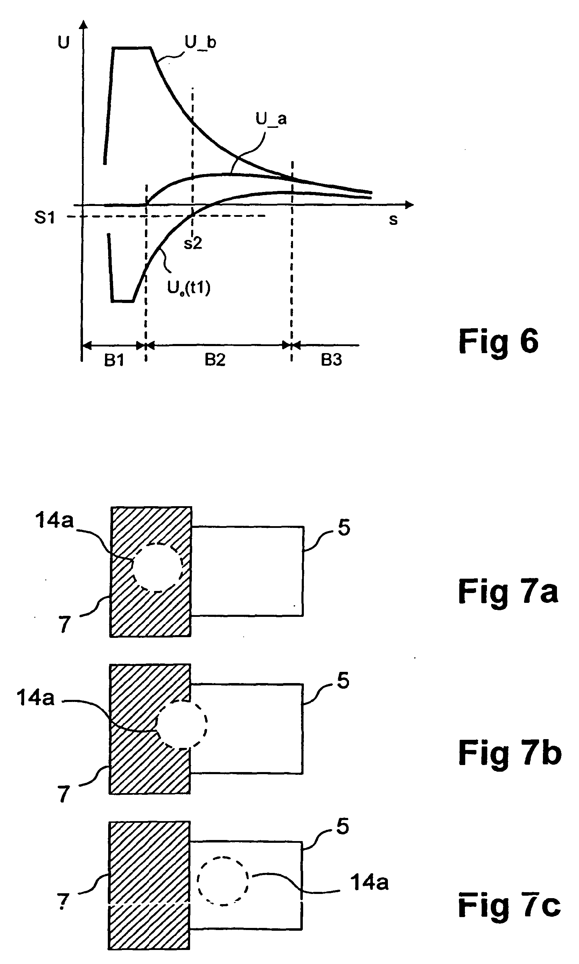

Dies ist in Figur 6 dargestellt. Mit Ua ist die Abstandsabhängigkeit des Empfangssignals bezeichnet, wenn nur der Sender 2a aktiviert wäre. Mit Ub ist die Abstandsabhängigkeit des Empfangssignals bezeichnet, wenn nur der Sender 2b aktiviert wäre. Da die vom Objekt 6 zurückreflektierten und in Richtung des Empfängers 5 geführten Sendelichtstrahlen 3a, 3b der Sender 2a, 2b durch die Empfängerblende 7 unterschiedlich abgeschattet werden, ergeben sich die unterschiedlichen Abstandsabhängigkeiten für Ua, Ub. Daraus resultiert die Abstandsabhängigkeit von Ue ($t_1$), wie in Figur 6 dargestellt.

Das Empfangssignal Ue ($t_1$) wird nun zur Generierung des binären Schaltsignals wie in Figur 6 dargestellt mit dem Schwellwert S 1 bewertet, welcher der Tastweite s2 entspricht.

Ist die aktuelle Objektdistanz kleiner als die Tastweite s2, so liegt der aktuelle Wert von Ue ($t_1$) unterhalb des Schwellwerts s1, so dass das Objekt 6 als erkannt gilt, das heißt das binäre Schaltsignal nimmt den Schaltzustand "Objekt erkannt" ein. Ist die aktuelle Objektdistanz größer als die Tastweite s2, so liegt der aktuelle Wert von Ue ($t_1$) oberhalb des Schwellwerts s1, so dass das binäre Schaltsignal den Schaltzustand "freier Überwachungsbereich" einnimmt.

Figur 7 zeigt die Position des Empfangslichtflecks 14a in Abhängigkeit er Objektdistanzbereiche B1, B2, B3 in Figur 6. Figur 7a steht für den Distanzbereich B1, wo der Empfangslichtfleck 14a vollständig durch die Empfangsblende 7 abgedeckt ist.

Die Figur 7b zeigt die Position des Empfangslichtflecks 14a bei einem Objekt 6 in der Tastweite, das heißt am Schaltpunkt im Bereich B2. Der Bereich B3 wird in Figur 7c gezeigt.

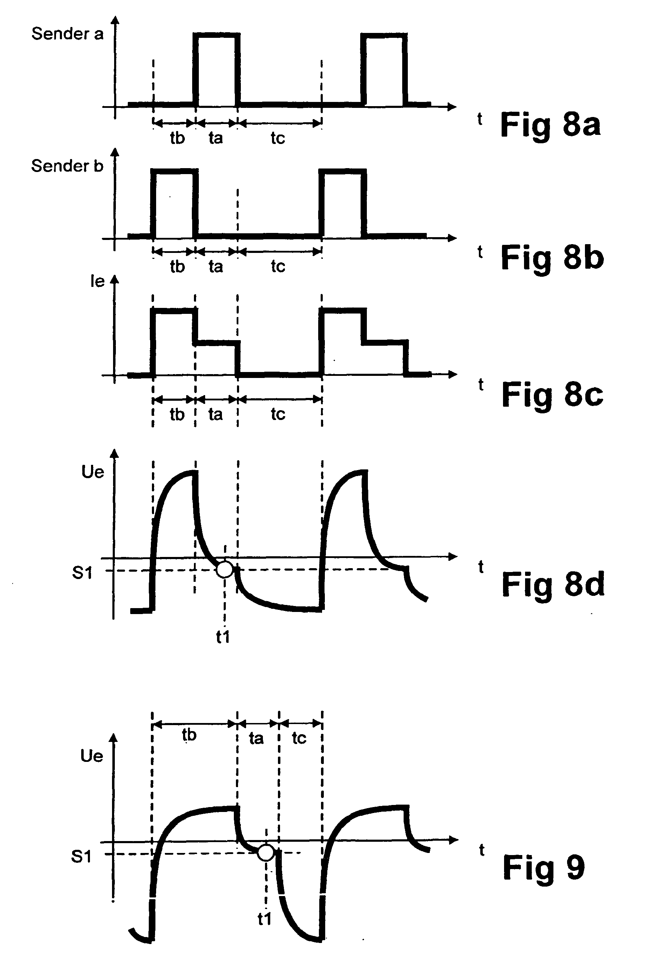

Die Figuren 8a bis 8d zeigen eine elektronische Tastweiten-Einstellung für den optischen Sensor 1 gemäß Figur 1 durch eine Sendepausenvariation. Die Sendepausen der Sender 2a, 2b sind gemäß Figuren 8a, 8b gegenüber der in den Figuren 4a, b gezeigten Grundeinstellung verlängert. Dadurch verschiebt sich der Mittelwert des Empfangssignals Ue nach unten, das heißt zu kleineren Werten hin. Damit muss der Anteil des Empfangspegels von Sender 2a weiter reduziert werden, damit der Schwellwert s1 unterschritten wird, das heißt die Tastweite wird zu kleineren Objektabständen hin verschoben.

Figur 9 zeigt eine elektronische Tastweiteneinstellung für den optischen Sensor 1 gemäß Figur 1 durch Referenzpulsdauervariation. Wird die Pulsdauer des Senders 2b (Figur 4a) verlängert, verschiebt sich die Tastweite zu größeren Objektabständen hin.

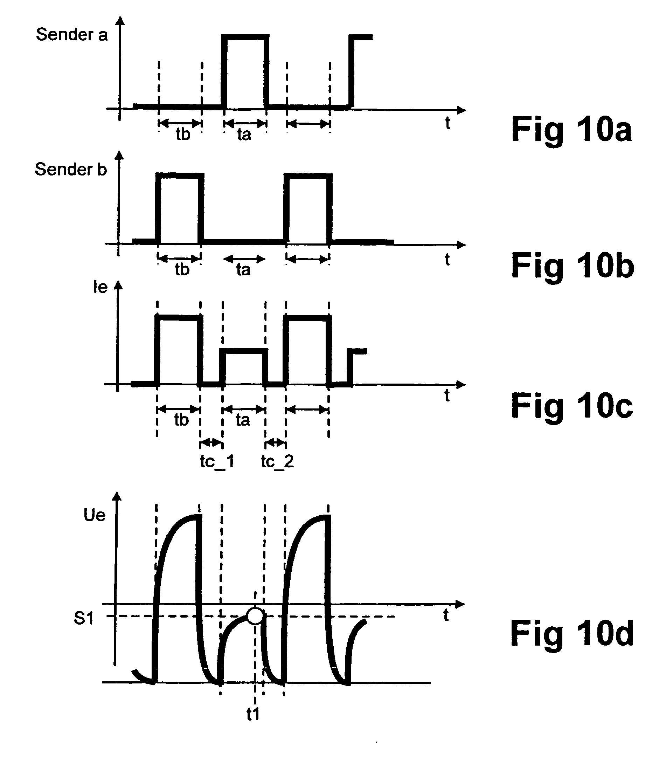

Die Figuren 10a bis 10d zeigen eine weitere Modifikation der Signale gegenüber der Grundeinstellung gemäß Figuren 4a bis 4d. Hier liegt der Sendelichtpuls des Senders 2a genau zwischen zwei Sendelichtpulsen des Senders 2b. Durch diese Pulsfolgen werden Mess-Fehler durch Einschwingvorgänge vermieden.

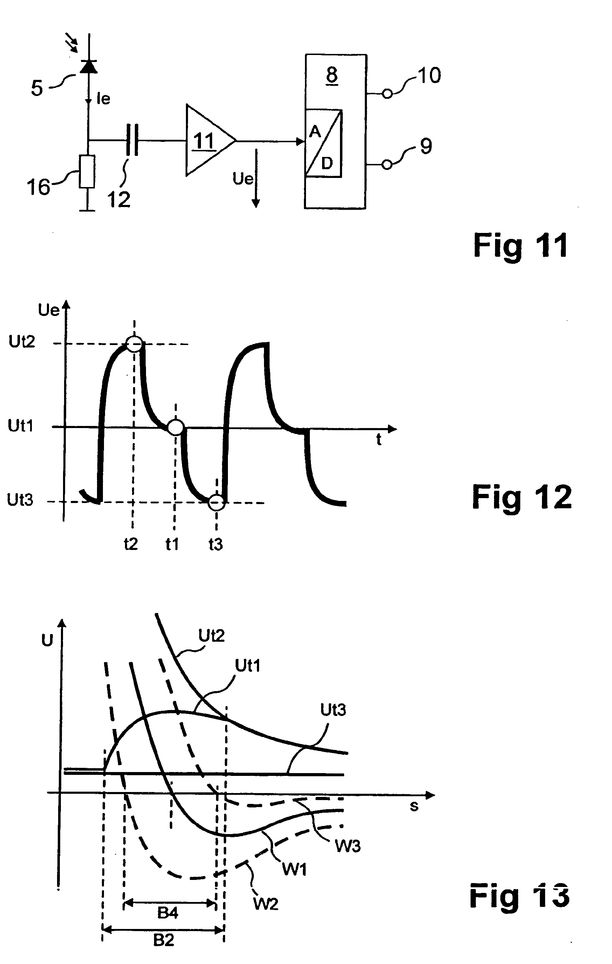

Figur 11 zeigt ein zweites Ausführungsbeispiel einer Auswerte- und Steuereinheit 8 für den optischen Sensor 1 gemäß Figur 1. Die Auswerte- und Steuereinheit 8 besteht aus einem Mikroprozessor mit integriertem Analog-Digital-Wandler (A/D), über welchen die Empfangssignale Ue des Empfängers 5, die wiederum über den Koppelkondensator 12 und den Verstärker 11 geführt werden, eingelesen werden.

Figur 12 zeigt das Prinzip eines Auswerteverfahrens, welches mit der Auswerte- und Steuereinheit 8 gemäß Figur 11 durchführbar ist. In diesem Fall wird innerhalb jeder Periode, innerhalb derer die Sender 2a, 2b jeweils einen Sendelichtpuls emittieren, das Empfangssignal Ue zu drei Abtastzeitpunkten abgetastet. Die Abtastung des Empfangssignals Ue zum Abtastzeitpunkt $t_2$ erfolgt während der Aussendung eines Sendelichtpulses durch den Sender 2b, wobei der Wert $Ut_2$ erhalten wird. Die Abtastung zum Abtastzeitpunkt $t_1$ erfolgt während der Aussendung eines Sendelichtpulses durch den Sender 2a, wobei der Wert $Ut_1$ erhalten wird. Die Abtastung zum Abtastzeitpunkt $t_3$ erfolgt während einer Sendepause wobei der Wert $Ut_3$ erhalten wird.

Die Tastweite wird auch bei diesem Beispiel analog zu der Ausführungsform gemäß den Figuren 4 und 5 so eingestellt, dass bei einem Objekt 6 in der Tastweite die daran rückreflektierten Sendelichtstrahlen 3b des zweiten Senders 2b durch die Empfängerblende 7 nicht abgeschattet werden, während die Sendelichtstrahlen 3a des zweiten Senders 2a von der Empfängerblende 7 etwa zur Hälfte abgeschattet werden. Demzufolge ist bei einem Objekt 6 in der Tastweite das Signal $Ut_2$ doppelt so groß wie das Signal $Ut_1$. Dasselbe gilt auch für die auf die Werte $Ut_3$ bezogenen Differenzen $Ut_2$ bis $Ut_3$ und $Ut_1$ bis $Ut_3$.

Zur Bildung des binären Schaltsignals wird demzufolge die Linearkombination

$$W1 = Ut_2 + Ut_3 - 2 \cdot Ut_1$$

gebildet. Der Verlauf von W1 sowie der Werte $Ut_1$, $Ut_2$, $Ut_3$ ist in Figur 13 dargestellt.

Diese Linearkombination W 1 wird zur Generierung des binären Schaltsignals mit dem Schwellwert s1 = 0 bewertet.

Bei einem Objekt 6 in der Tastweite wird der Wert W1 = 0 erhalten. Bei einem Objekt 6 in einem Abstand, der kleiner ist als die Tastweite, liegt W 1 oberhalb von s1, so dass ein Objekt 6 als erkannt gilt.

Zur elektrischen Einstellung der Tastweite wird zu der Kurve W1 ein Wert $K \cdot X$ addiert oder subtrahiert, wobei der Schwellwert s1 unverändert bleibt. Dabei ist K ein positiver Gewichtungsfaktor und $X = Ut_2 - Ut_3$.

Zur Erhöhung der Tastweite wird die Linearkombination

$$W3 = W1 + K \cdot X$$

gebildet und mit dem Schwellwert s1 = 0 bewertet (Figur 13).

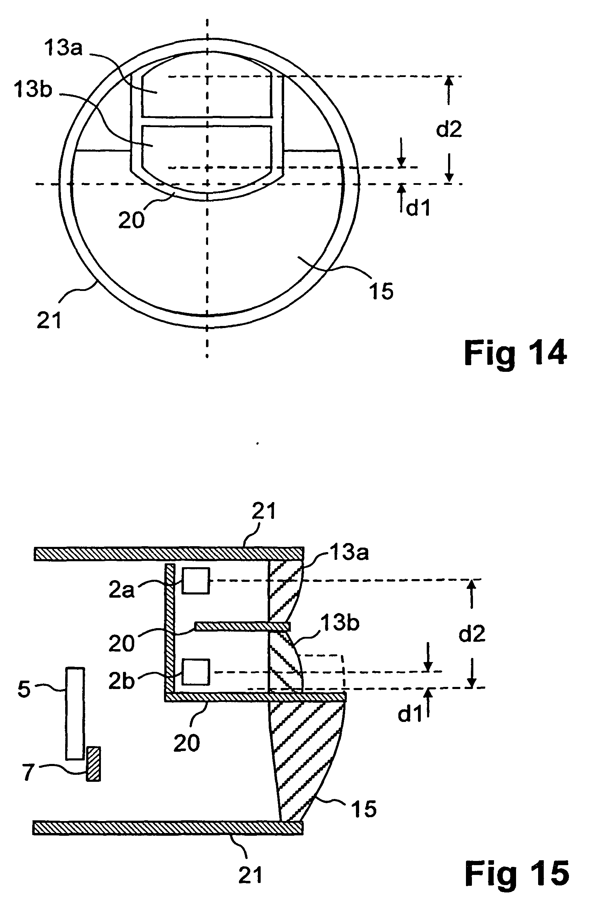

Figur 14 zeigt ein zweites Ausführungsbeispiel der Optikanordnung für den optischen Sensor 1 gemäß Figur 1. Durch die Anordnung gemäß Figur 14 wird ein optischer Sensor 1 in Form eines Rundhülsengerätes verwendet. Die Komponenten gemäß Figur 14 entsprechen in ihrer Funktion weitgehend der Ausführungsform gemäß Figur 2 und sind mit entsprechenden Bezugsziffern bezeichnet.

Die optische Achse der Sendelinse 13b hat einen sehr kleinen Basisabstand d 1 zur optischen Achse der Empfangslinse 15. Die Empfangslinse 15 umschließt die Sendelinse 13b seitlich teilweise, um eine möglichst große Empfangsfläche zu nutzen. Die Sendelinse 13a liegt zur Sendelinse 13b gespiegelt, wodurch sich ein großer Basisabstand d2 ergibt. Die optische Trennung erfolgt durch nichttransparente Trennstege 20. Alle Linsen werden durch das Rundhülsengehäuse 21 umschlossen.

Figur 15 zeigt die Seitenansicht der Optikanordnung nach Figur 14. Durch die zentrische Lage der optischen Achse der Empfangslinse 15 liegt auch das Empfangselement weitgehend zentrisch.

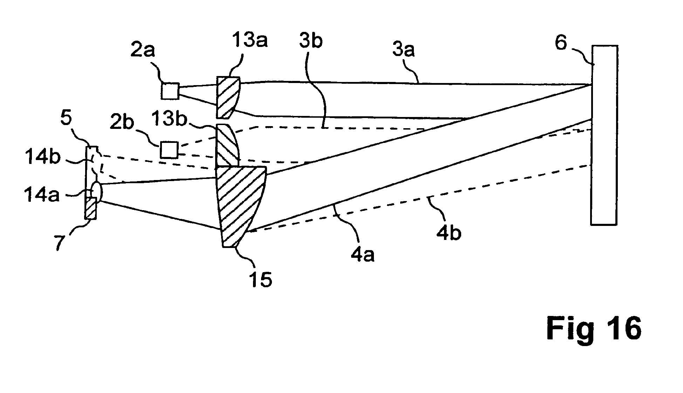

Figur 16 zeigt den Strahlengang der Optikanordnung nach Figur 14.

Bezugszeichenliste

(1) Optischer Sensor
(2a) Sender
(2b) Sender
(3a) Sendelichtstrahl
(3b) Sendelichtstrahl
(4) Empfangslichtstrahl
(5) Empfänger
(6) Objekt
(7) Empfängerblende
(8) Auswerte- und Steuereinheit
(9) Schaltausgang
(10) Schnittstelle
(11) Verstärker
(12) Koppelkondensator
(13a) Sendelinse
(13b) Sendelinse
(14a) Empfangslichtfleck
(14b) Empfangslichtfleck
(15) Empfangslinse
(16) Arbeitswiderstand
(17) S&H-Glied
(18) Taktgeber
(19) Komparator
(20) Trennsteg
(21) Rundhülsengehäuse
d1: Basisabstand Empfänger zum Referenzsender
d2: Basisabstand Empfänger zum Messsender
d3: Abstand Empfängerblende zur Empfangsachse
s1: Schwellwert
t1: Abtastzeitpunkt am Ende des Messpulses
t2: Abtastzeitpunkt am Endes des Referenzpulses
t3: Abtastzeitpunkt am Ende der Sendepulspause
ta: Messpulsdauer
tb: Referenzpulsdauer
tc: Sendepausendauer
Ie: Fotostrom im Empfangselement
Ue: verstärktes Empfangssignal
Ua: Empfangsmesspegel
Ub: Empfangsreferenzpegel
Udif: Pegel zum Abtastzeitpunkt t1
B1: Objektdistanzbereich bei vollständig abgedecktem Mess- Empfangslichtfleck
B2: Objektdistanzbereich bei teilweise abgedecktem Mess- Empfangslichtfleck
B3: Objektdistanzbereich bei nicht abgedecktem Mess-Empfangslichtfleck
B4: Tastweiteneinstellbereich
W1: berechnete Differenzkurve
W2: Differenzkurve für kleinere Tastweite
W3: Differenzkurve für größere Tastweite

**Patentansprüche**

1. Optischer Sensor (1) zur Erfassung von Objekten (6) innerhalb eines Überwachungsbereichs mit zwei Sendern (2a, 2b), welche Sendelichtstrahlen (3a, 3b) in Form von alternierenden Folgen von Sendelichtpulsen emittieren, mit einem Empfänger (5), auf welchen die von einem Objekt (6) reflektierten Sendelichtpulse der beiden Sender (2a, 2b) als Empfangslichtstrahlen (4) auftreffen, und mit einer Auswerte- und Steuereinheit (8), mittels derer die Empfangssignale am Ausgang des Empfängers (5) so abgetastet werden, dass der bei einem Abtastzeitpunkt erhaltene Empfangspegel oder die Linearkombinationen der bei mehreren Arbeitszeitpunkten erhaltenen Empfangspegel ein für den Objektabstand charakteristisches Maß des Verhältnisses der Empfangspegel der von den beiden Sendern (2a, 2b) emittierten und auf den Empfänger (5) geführten Sendelichtstrahlen (3a, 3b) enthalten, und wobei in der Auswerte- und Steuereinheit (8) die Empfangspegel oder deren Linearkombination mit einem eine Tastweite definierenden Schwellwert (s1) bewertet werden, wodurch ein binäres Schaltsignal generiert wird, dessen Schaltzustände angeben, ob sich ein Objekt (6) innerhalb des von der Tastweite begrenzten Überwachungsbereichs befindet oder nicht, **dadurch gekennzeichnet, dass** dem Empfänger (5) eine Empfängerblende (7) zur Ausblendung eines Teils der Empfangslichtstrahlen (4) vorgeordnet ist, und dass die Sender (2a, 2b) und der Empfänger (5) längs einer Geraden angeordnet sind, wobei ein Sender (2b) einen Referenz-Sender bildet, welcher in geringem Abstand zum Empfänger (5) so angeordnet ist, dass die von diesem emittierten Sendelichtstrahlen (3b) unabhängig von der Objektdistanz nach Reflektion an einem Objekt (6) zumindest weitgehend vollständig auf den Empfänger (5) treffen, und wobei der zweite Sender (2a) einen Mess-Sender bildet, welcher in größerem Abstand als der erste Sender (2b) zum Empfänger (5) angeordnet wird, so dass abhängig von der Objektdistanz ein Teil der vom Mess-Sender emittierten und vom Objekt (6) reflektierten Sendelichtstrahlen (3a) von der Blende abgeschirmt wird und nicht auf den Empfänger (5) trifft, und dass der Empfänger (5) von einem einzelnen Empfangselement, das heißt von einem Element mit einer einzigen lichtempfindlichen Fläche, gebildet wird, wobei diese einzige lichtempfindliche Fläche der Blende zugeordnet ist.

2. Optischer Sensor nach Anspruch 1, **dadurch gekennzeichnet, dass** die Sender (2a, 2b) periodisch Folgen von alternierenden Sendelichtpulsen mit einem vorgegebenen Puls-Pausenverhältnis emittieren.

**3.** Optischer Sensor nach Anspruch 2, **dadurch gekennzeichnet, dass** die Empfangsignale des Empfängers (5) eine Überlagerung des jeweils während einer Periode emittierten Sendelichtpulses des ersten Senders (2a) und des Sendelichtpulses des zweiten Senders (2b) bilden, und dass während jeder Periode das Empfangssignal zu einem Abtastzeitpunkt abgetastet wird, wodurch ein Empfangspegel gewonnen wird, der mit dem Schwellwert (s1) bewertet wird.

**4.** Optischer Sensor nach Anspruch 3, **dadurch gekennzeichnet, dass** die Auswerte- und Steuereinheit (8) einen Signalverstärker (11), ein Sample&Hold-Glied (17) sowie einen Komparator (19) aufweist.

**5.** Optischer Sensor nach Anspruch 2, **dadurch gekennzeichnet, dass** während jeder Periode die am Ausgang des Empfängers (5) anstehenden Empfangssignale jeweils einmal während der Emission der Sendelichtstrahlen (3a, 3b) des ersten und zweiten Senders (2a, 2b) sowie während der Sendepause abgetastet werden, und dass eine Linearkombination der bei diesen Abtastzeitpunkten ermittelten Empfangspegel gebildet wird, wobei diese mit dem Schwellwert (s1) bewertet wird.

**6.** Optischer Sensor nach Anspruch 4, **dadurch gekennzeichnet, dass** die Auswerte- und Steuereinheit (8) eine Rechnereinheit aufweist, wobei in diese die Empfangssignale über einen Analog-Digital-Wandler einlesbar sind.

**7.** Optischer Sensor nach einem der Ansprüche 1 bis 6, **dadurch gekennzeichnet, dass** zur Einstellung der Tastweite die Empfängerblende (7) verstellbar ist.

**8.** Optischer Sensor nach einem der Ansprüche 1 bis 6, **dadurch gekennzeichnet, dass** die Tastweite elektronisch einstellbar ist.

**9.** Optischer Sensor nach Anspruch 8, **dadurch gekennzeichnet, dass** die Tastweite durch Variation der Pulslängen der Sendelichtpulse und/oder der Längen der Sendepausen zwischen den Sendelichtpulsen einstellbar ist.

**Claims**

**1.** Optical sensor (1) for detection of objects (6) within a monitoring region, comprising two transmitters (2a, 2b), which emit transmitted light beams (3a, 3b) in the form of alternating trains of transmitted light pulses, a receiver (5) on which the transmitted light pulses, which are reflected by an object (6), of the two transmitters (2a, 2b) are incident as received light beams (4), and an evaluating and control unit (8), by means of which the received signals are so scanned at the output of the receiver (5) that the reception level obtained at a scanning instant or the linear combinations of the reception levels obtained at several working instants contains or contain a measure, which is characteristic of the object spacing, of the ratio of the reception level of the transmitted light beams (3a, 3b) emitted by the two transmitters (2a, 2b) and guided onto the receiver (5), and wherein the reception levels or the linear combination thereof is or are evaluated in the evaluating and control unit (8) by a threshold value (s1) defining a scanning width, whereby a binary switching signal is generated, the switching states of which indicate whether or not an object (6) is disposed within the monitoring region bounded by the scanning width, **characterised in that** a receiver aperture (7) for cutting out a part of the received light beams (4) is arranged upstream of the receiver (5) and that the transmitters (2a, 2b) and the receiver (5) are arranged along a straight line, wherein one transmitter (2b) forms a reference transmitter which is so arranged at a small spacing from the receiver (5) that the transmitted light beams (3b) emitted by this are after reflection at an object (6) incident at least substantially fully on the receiver (5) regardless of the object spacing and wherein the second transmitter (2a) forms a measuring transmitter which is arranged at a greater spacing from the receiver (5) than the first transmitter (2b) so that a part of the transmitted light beams (3a) emitted by the measuring transmitter and reflected by the object (6) are screened by the aperture and are not incident on the receiver (5) regardless of the object spacing, and that the receiver (5) is formed by an individual receiving element, i.e. by an element with a single light-sensitive surface, wherein this single light-sensitive surface is associated with the aperture.

**2.** Optical sensor according to claim 1, **characterised in that** the transmitters (2a, 2b) emit periodic trains of alternating transmitted light pulses with a predetermined pulse/pause ratio.

**3.** Optical sensor according to claim 2, **characterised in that** the received signals of the receiver (5) form a superimposition on the respective transmitted light pulse, which is emitted during a period, of the first transmitter (2a) and on the transmitted light pulse of the second transmitter (2b) and that during each period the received signal is scanned at a scanning instant, whereby a reception level is obtained which is evaluated by the threshold value (s1).

**4.** Optical sensor according to claim 3, **characterised in that** the evaluating and control unit (8) comprises a signal amplifier (11), a sample-and-hold element (17) and a comparator (19).

**5.** Optical sensor according to claim 2, **characterised in that** during each period the received signals present at the output of the receiver (5) are respectively scanned once during the emission of the transmitted light beams (3a, 3b) of the first and second transmitters (2a, 2b) and during the transmission pause and that a linear combination of the reception level determined at the scanning instants is formed, wherein this is evaluated by the threshold value (s1).

**6.** Optical sensor according to claim 4, **characterised in that** the evaluating and control unit (8) comprises a computer unit, wherein the received signals can be read into this by way of an analog-to-digital converter.

**7.** Optical sensor according to any one of claims 1 to 6, **characterised in that** the receiver aperture (7) is adjustable for setting the scanning width.

**8.** Optical sensor according to any one of claims 1 to 6, **characterised in that** the scanning width is settable electronically.

**9.** Optical sensor according to claim 8, **characterised in that** the scanning width is settable by variation of the pulse lengths of the transmitted light pulses and/or of the lengths of the transmission pauses between the transmitted light pulses.


**Revendications**

**1.** Capteur optique (1) destiné à la détection d'objets (6) à l'intérieur d'une zone de surveillance, avec deux émetteurs (2a, 2b) qui émettent des rayons lumineux d'émission (3a, 3b) sous la forme de suites alternantes d'impulsions lumineuses d'émission, avec un récepteur (5) sur lequel les impulsions lumineuses d'émission des deux émetteurs (2a, 2b) réfléchies par un objet (6) arrivent sous la forme de rayons lumineux de réception (4), et avec une unité d'évaluation et de commande (8) au moyen de laquelle les signaux de réception à la sortie du récepteur (5) sont échantillonnés de telle façon que le niveau de réception reçu à un instant d'échantillonnage ou les combinaisons linéaires des niveaux de réception reçus à plusieurs instants d'échantillonnage contiennent une mesure, caractéristique de la distance de l'objet, du rapport des niveaux de réception des rayons lumineux d'émission (3a, 3b) émis par les deux émetteurs (2a, 2b) et guidés sur le récepteur (5), et les niveaux de réception ou leurs combinaisons linéaires étant évalués dans l'unité d'évaluation et de commande (8) avec une valeur seuil (s1) définissant une largeur de balayage, avec pour effet qu'un signal de commutation binaire est généré, dont les états de commutation indiquent si un objet (6) se trouve ou non à l'intérieur de la zone de surveillance limitée par la largeur de balayage, **caractérisé en ce qu'**un obturateur de récepteur (7) servant à masquer une partie des rayons lumineux de réception (4) est placé avant le récepteur (5), et que les émetteurs (2a, 2b) et le récepteur (5) sont disposés le long d'une droite, un émetteur (2b) formant un émetteur de référence, lequel est disposé à faible distance du récepteur (5) de façon qu'indépendamment de la distance de l'objet, les rayons lumineux d'émission (3b) émis par celui-ci atteignent le récepteur (5) au moins largement en totalité après réflexion sur un objet (6), et le deuxième émetteur (2a) formant un émetteur de mesure, lequel est disposé à plus grande distance du récepteur (5) que le premier émetteur (2b), de façon qu'en fonction de la distance de l'objet, une partie des rayons lumineux d'émission (3a) émis par l'émetteur de mesure et réfléchis par l'objet (6) soit masquée par l'obturateur et n'atteigne pas le récepteur (5), et que le récepteur (5) est formé d'un seul élément de réception, c'est-à-dire d'un élément avec une surface photosensible unique, cette surface photosensible unique étant associée à l'obturateur.

**2.** Capteur optique selon la revendication 1, **caractérisé en ce que** les émetteurs (2a, 2b) émettent périodiquement des suites d'impulsions lumineuses d'émission alternantes avec un rapport impulsion-pause prédéfini.

**3.** Capteur optique selon la revendication 2, **caractérisé en ce que** les signaux de réception du récepteur (5) forment une superposition de l'impulsion lumineuse d'émission du premier émetteur (2a) émise pendant une période et de l'impulsion lumineuse d'émission du deuxième émetteur (2b), et que pendant chaque période, le signal de réception est échantillonné à un instant d'échantillonnage, moyennant quoi on obtient un niveau de réception qui est évalué avec la valeur seuil (s1).

**4.** Capteur optique selon la revendication 3, **caractérisé en ce que** l'unité d'évaluation et de commande (8) présente un amplificateur de signaux (11), un circuit Sample&Hold (échantillonneur-bloqueur) (17) ainsi qu'un comparateur (19).

**5.** Capteur optique selon la revendication 2, **caractérisé en ce que** pendant chaque période, les signaux de réception présents à la sortie du récepteur (5) sont échantillonnés chaque fois une fois pendant l'émission des rayons lumineux d'émission (3a, 3b) du premier et du deuxième émetteur (2a, 2b) ainsi que pendant la pause d'émission, et qu'une combinaison linéaire des niveaux de réception déterminés à ces instants d'échantillonnage est formée, laquelle est évaluée avec la valeur seuil (s1).

6. Capteur optique selon la revendication 4, **caractérisé en ce que** l'unité d'évaluation et de commande (8) présente une unité de calcul, les signaux de réception pouvant être entrés dans celle-ci par l'intermédiaire d'un convertisseur analogique-numérique.

7. Capteur optique selon une des revendications 1 à 6, **caractérisé en ce que** l'obturateur de récepteur (7) est déplaçable pour permettre le réglage de la largeur de balayage.

8. Capteur optique selon une des revendications 1 à 6, **caractérisé en ce que** la largeur de balayage est réglable électroniquement.

9. Capteur optique selon la revendication 8, **caractérisé en ce que** la largeur de balayage est réglable par variation des longueurs d'impulsion des impulsions lumineuses d'émission et/ou des longueurs des pauses d'émission entre les impulsions lumineuses d'émission.

1

Fig 1

**Fig 2**

**Fig 3**

**Fig 4a**

**Fig 4b**

**Fig 4c**

**Fig 4d**

**Fig 5**

**Fig 6**

**Fig 7a**

**Fig 7b**

**Fig 7c**

Sender a

tb  ta  tc

t  **Fig 8a**

Sender b

tb  ta  tc

t  **Fig 8b**

Ie

tb  ta  tc

t  **Fig 8c**

Ue

S1

t1

t  **Fig 8d**

tb  ta  tc

Ue

S1

t1

t  **Fig 9**

Sender a

**Fig 10a**

Sender b

**Fig 10b**

le

**Fig 10c**

Ue

S1

t1

**Fig 10d**

**Fig 11**

**Fig 12**

**Fig 13**

13a
13b
20
21
15
d2
d1

**Fig 14**

21
13a
2a
20
13b
5
2b
7
20
d2
d1
15
21

**Fig 15**

**Fig 16**

**IN DER BESCHREIBUNG AUFGEFÜHRTE DOKUMENTE**

**In der Beschreibung aufgeführte Patentdokumente**

- DE 19808215 A1
- DE 4445535 A1
- WO 0129576 A1
- DE 19951557
- EP 1722191 A